# EUROPÄISCHE PATENTSCHRIFT

(11) **EP 2 216 117 B1**
(45) Veröffentlichungstag und Bekanntmachung des Hinweises auf die Patenterteilung: **10.05.2017**
(21) Anmeldenummer: 10150766.3
(22) Anmeldetag: 14.01.2010
(51) Int. Cl.: B23D 57/00, B28D 1/08, E02D 9/04

(54) **Seilsäge sowie Verfahren zum Betrieb einer solchen Seilsägeeinheit**
Rope saw and method for operating same
Scie à câble ainsi que procédé de fonctionnement d'une telle unité de scie à câble

(30) Priorität: 10.02.2009 CH 1972009
(43) Veröffentlichungstag der Anmeldung: 11.08.2010
(73) Patentinhaber: Betag-Betontaglio SA, 6814 Cadempino (CH)
(72) Erfinder: Hochuli, Peter, 6992, Vernate (CH)
(74) Vertreter: Rentsch Partner AG

(56) Entgegenhaltungen:
- EP-A1- 0 593 899
- WO-A1-2004/072529
- WO-A1-2006/126884
- DE-U1- 29 814 495
- JP-A- 3 184 718
- JP-A- 3 277 462
- US-H- H45

## Beschreibung

Die vorliegende Erfindung bezieht sich auf das Gebiet des Durchtrennens von Beton- und/oder Stahlstrukturen. Sie betrifft eine Seilsägeeinheit gemäss dem Oberbegriff des Anspruchs 1 sowie ein Verfahren zum Betrieb einer solchen Seilsägeeinheit. Eine solche Seilsägeeinheit ist der WO 2004/072529 A1 zu entnehmen.

Bei technischen Anlagen im oder am Wasser wie z.B. Erdöl- oder Erdgasplattformen, Hafenanlagen, Landungsbrücken oder dgl. werden häufig Pfahlgründungen eingesetzt, bei denen die Bauwerke auf Pfählen aus Beton, Stahl oder Stahl/Beton-Pfeilern ruhen, die durch das Wasser hindurch bis tief in den Meeresboden reichen. Beim Rückbau solcher Anlagen oder Bauwerke ist es erforderlich, die Gründungspfähle knapp oberhalb oder unterhalb des Bodens durchzuschneiden, um keine gefährlichen Hindernisse entstehen zu lassen und den ursprünglichen Zustand so weit wie möglich wieder herzustellen.

Es sind daher verschiedentlich Vorrichtungen und Verfahren angegeben worden, mit denen derartige Stahl- und/oder Betonstrukturen über und unter Wasser durchgeschnitten werden können. So ist aus der EP-A1-0 540 834 ein Verfahren und eine Vorrichtung zum Durchschneiden von Unterwasserstrukturen bekannt, bei denen ein einseitig zu öffnender, geschlossener rechteckiger Rahmen um die zu durchschneidende Struktur gelegt und an der Struktur fixiert wird. Auf zwei parallelen Längsholmen des Rahmens ist eine Sägeeinheit in Längsrichtung verfahrbar angeordnet, die ein um zwei gegenüberliegende Rollen quer zur Längsrichtung umlaufendes endloses Sägeseil umfasst. Eine der Rollen ist motorisch angetrieben. Beide Rollen sind mittels einer Seilzugmechanik auf den Längsholmen gleichsinnig verfahrbar, die zur Betätigung per Auftriebskraft mit einem gasgefüllten Ballon verbunden ist.

Bei abgenommenem Sägeseil wird der Rahmen geöffnet, um die zu durchschneidende Struktur gelegt und dann wieder geschlossen. Der Rahmen wird an der Struktur fixiert. Das Sägeseil wird dann um die beiden Rollen gelegt und gespannt. Bei laufendem Sägeseil wird die Sägeeinheit mit dem quer liegenden Sägeseil gegen die Struktur verfahren, so dass sich das vorzugsweise mit Diamantkörpern besetzte Seil langsam durch die Struktur frisst. Nachteilig ist bei dieser Lösung, dass zusätzlich zur Befestigung des Rahmens an der Struktur der gesamte Rahmen zunächst geöffnet und das Sägeseil abgenommen werden muss, um die Struktur zu umschliessen, und dass dann der Rahmen wieder geschlossen und das Sägeseil vor Ort aufgelegt werden muss. Dies erfordert gerade bei Unterwasserarbeiten einen erheblichen personellen und Zeitaufwand.

Ein anderes Verfahren zum Durchtrennen von unter Wasser liegenden Stahlbetonstrukturen ist aus der US-A-4,787,363 bekannt. Dort wird eine langes Sägeseil in Form einer Endlosschleife über Umlenkrollen von Land aus in das Wasser und unter der im Wasser befindlichen Struktur hindurch und wieder zurück an Land geführt. Das Sägeseil läuft an Land über zwei angetriebene Rollen einer ortsfesten und einer zum Spannen des Seiles verfahrbaren Antriebseinheit. Ein solches Verfahren ist jedoch nur bei speziellen Konfigurationen anwendbar, apparativ sehr aufwändig, wegen des langen Sägeseils sehr störungsanfällig und nicht sehr präzise einsetzbar, weil an der Struktur selbst jegliche Seilführung fehlt.

Es ist die Aufgabe der Erfindung, eine Vorrichtung und ein Verfahren zum Durchschneiden von über oder unter Wasser befindlichen Strukturen aus Beton, Metall oder dgl. zu schaffen, welche flexibel einsetzbar sind, sich durch einen besonders einfachen und robusten Aufbau bzw. eine besonderes einfache Handhabung auch in schwierigen Anwendungsfällen auszeichnen.

Die Aufgabe wird durch die Gesamtheit der Merkmale der Ansprüche 1 und 11 gelöst. Wesentlich für die Erfindung ist, dass zum Verfahren des einseitig offenen Rahmens auf den Führungsmitteln Druckzylinder vorgesehen sind und dass die Druckzylinder symmetrisch zu einer Mittellinie der Seilsägeeinheit angeordnet sind.

Eine Ausgestaltung der Erfindung ist dadurch gekennzeichnet, dass das Sägeseil um wenigstens ein motorisch antreibbares Antriebsrad geführt ist, welches ortsfest an dem Rahmen angebracht ist. Durch die feste Verbindung zwischen Rahmen und Antriebsrad wird eine besonders stabile Führung des Sägeseils erreicht. Als besonders effizient zum Antreiben des Sägeseils hat sich das vollständige, oder sogar mehrfache umschlingen des Antriebsrades mit dem Sägeseil erwiesen. Dadurch dass das Sägeseil mit mehr als 360 Grad des Umfangs des Antriebsrades in Wirkverbindung steht, wird ein besonders effektiver Reibschluss erreicht.

Die Antriebskräfte lassen sich dabei noch effektiver auf das Sägeseil übertragen, wenn gemäss einer anderen Ausgestaltung der Erfindung das Sägeseil um zwei motorisch antreibbare Antriebsräder geführt ist, welche vorzugsweise ortsfest auf gegenüberliegenden Seiten an dem Rahmen angebracht sind.

Eine straffe Führung des Seiles lässt sich auf einfache Weise dadurch erreichen, dass das Sägeseil um eine separate Seilspannrolle geführt ist, welche zum Spannen des Sägeseiles an dem Rahmen verstellbar angeordnet ist.

Der Aufbau der Seilsägeeinheit gestaltet sich besonders einfach, wenn gemäss einer anderen Ausgestaltung der Erfindung der Rahmen rechteckig ausgebildet ist und zwei Längsträgern und einen Querträger umfasst, und wenn alle für das Sägeseil vorgesehenen Rollen und Räder an den Längsträgern angebracht sind. Gemäss bevorzugter Ausführungsformen ist die Seilsägeeinheit zur einfacheren Montage in modulare Bauweise erstellt und lässt sich einfach montieren und demontieren.

Eine weitere Ausgestaltung der Erfindung zeichnet sich dadurch aus, dass die Führungsmittel eine Schlittenführung und einen auf der Schlittenführung verfahrbar angeordneten Schlitten umfassen, und dass der Rahmen auf dem Schlitten befestigt ist.

Vorzugsweise umfasst die Schlittenführung zwei parallele, voneinander beabstandete Führungsstangen, welche am einen Ende in einem Endstück und am anderen Ende in einer Befestigungseinheit gelagert sind, mit welcher die Schlittenführung an der zu durchsägenden Struktur befestigbar ist.

Eine andere Ausgestaltung ist dadurch gekennzeichnet, dass zum Verfahren des einseitig offenen Rahmens auf den Führungsmitteln Pneumatikzylinder vorgesehen sind.

Bevorzugt werden das motorisch antreibbare Antriebsrad bzw. die motorisch antreibbaren Antriebsräder von einem pneumatischen, oder besonders bevorzugt von einem hydraulischen Antriebsmotor angetrieben.

Um das Sägeseil gleichmässig abzunutzen, ist es weiterhin von Vorteil, dass das Sägeseil durch eine Verdrilleinheit geführt ist, welche das Sägeseil während des Durchlaufs um seine Längsachse dreht. Die Verdrilleinheit umfasst vorzugsweise mindestens eine Verdrillrolle, die in reibschlüssiger Verbindung mit dem Sägeseil steht. Die Drehachse der Verdrillrolle steht nicht senkrecht zur - vom Sägeseil definierten - Längsachse, sondern schliesst mit dieser einen Winkel von vorzugsweise 84 bis 87 Grad ein. Das Verkippen der Achse der Verdrillrolle um 3 bis 6 Grad aus der Senkrechten genügt, um sicherzustellen, dass das Sägeseil zuverlässig aktiv verdrillt wird und eine einseitige Abnützung vermieden wird. Das aus dem Stand der Technik bekannte passive Vorverdrillen vor der Montage des Sägeseils kann dies nicht bewerkstelligen. Beim Auftreten einer einseitigen Abnutzung am Sägeseil konnte ein passiv vorverdrilltes Sägeseil die Drehung um die Seillängsachse nicht mehr bewerkstelligen, so dass nur noch die einseitig abgenutzte Seite im Schneideingriff mit dem Material der zu schneidenden Struktur stand und entsprechend die einseitige Abnutzung noch verstärkt wurde. Die Verdrilleinheit verhindert diesen negativen Effekt. Sie lässt sich an jeder geeigneten Stelle der Seilführung anordnen, die genügend Platz für die Verdrilleinheit bietet, den Schneidvorgang aber nicht behindert.

Gemäss weiterer bevorzugter Ausführungsbeispiele lassen sich Verdrilleinheiten realisieren, bei denen mehr als eine Verdrillrolle zum Einsatz kommen. Auch aktiv angetriebene Verdrillrollen, deren Drehachsen auch parallel zur - vom Sägeseil definierten - Längsachse stehen können haben sich als vorteilhaft erwiesen. Allen Ausführungsformen verdrillen das Sägeseil oder verstärken die Verdrillung eines bereits vorverdrillten Sägeseils.

Das erfindungsgemässe Verfahren ist dadurch gekennzeichnet, dass das Verfahren des einseitig offenen Rahmens durch Druckbeaufschlagung hydraulisch oder pneumatisch erfolgt.

Eine Ausgestaltung des erfindungsgemässen Verfahrens ist dadurch gekennzeichnet, dass nach der Beendigung des Schneidvorgangs das Sägeseil aufgetrennt und abgenommen wird.

Vorzugsweise erfolgt der Antrieb des Sägeseils insbesondere hydraulisch.

Mit Vorteil wird ein mit Diamanten besetztes Sägeseil verwendet.

Die Erfindung soll nachfolgend anhand eines Ausführungsbeispiels im Zusammenhang mit der Zeichnung näher erläutert werden. Es zeigen
- Fig. 1: in einer stark vereinfachten Darstellung in der Draufsicht von oben eine Seilsägeeinheit gemäss einem bevorzugten Ausführungsbeispiel der Erfindung, die an einer zu durchsägenden Struktur befestigt ist, deren Rahmen sich aber noch in einer zurückgezogenen ersten Position befindet; und
- Fig. 2: die Seilsägeeinheit aus Fig. 1 mit der nach dem Sägen vom Rahmen eingenommenen ausgefahrenen zweiten Position (strichliniert eingezeichnet).

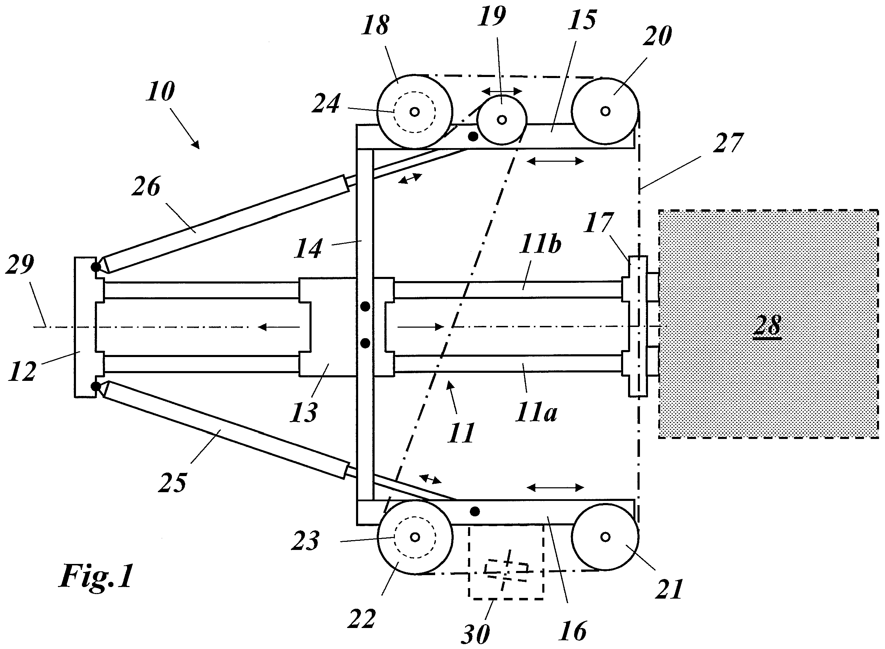

In Fig. 1 ist in einer stark vereinfachten Darstellung in der Draufsicht von oben eine Seilsägeeinheit gemäss einem bevorzugten Ausführungsbeispiel der Erfindung wiedergegeben. Die Seilsägeeinheit 10 umfasst zwei relativ zueinander verfahrbare Strukturen, nämlich eine Schlittenführung 11 und einen einseitig offenen Rahmen, der aus dem Querträger 14 und den beiden Längsträgern 15 und 16 gebildet wird. Der Rahmen 14, 15, 16 ist mit dem Querträger 14 auf einem Schlitten 13 befestigt, der seinerseits auf zwei parallelen, voneinander beabstandeten Führungsstangen 11a und 11b der Schlittenführung 11 verfahrbar gelagert ist. Die Führungsstangen 11a, 11b enden auf der linken Seite in einem quer liegenden Endstück 12, und auf der rechten Seite in einer quer liegenden Befestigungseinheit 17. Endstück 12, Befestigungseinheit 17 und die beiden Führungsstangen 11a und 11b bilden so zusammen einen stabilen, schmalen Rahmen, der den Schlitten 13 und damit auch den Rahmen 14, 15, 16 trägt.

An den Längsträgern 15 und 16 sind gegenüberliegend an den Ecken eines imaginären Rechtecks zwei grosse Antriebsräder 18 und 22 und zwei Umlenkrollen 20 und 21 angebracht. Um diese Räder und Rollen ist ein Sägeseil 27 gelegt, das die Form einer Endlosschlaufe hat. Das Sägeseil 27 schliesst die offene Seite des Rahmens 14, 15, 16. Zwischen dem oberen Antriebrad 18 und der oberen Umlenkrolle 20 ist am dortigen Längsträger 15 zusätzlich eine Seilspannrolle 19 vorgesehen, die mit ihrer Achse verstellt werden kann (Doppelpfeil in Fig. 1), um das Sägeseil 27 ausreichend gespannt zu halten. Die beiden Antriebsräder 18 und 22 weisen jeweils einen (gestrichelt angedeuteten) Antriebsmotor 23 bzw. 24 auf, der vorzugsweise pneumatisch, besonders bevorzugt hydraulisch funktioniert, aber auch anders ausgebildet sein kann.

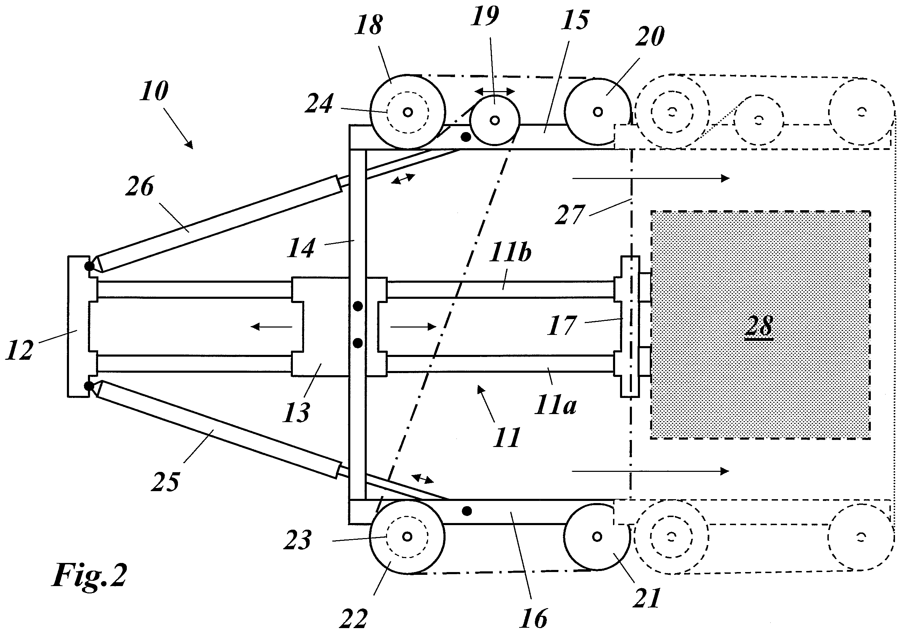

Um den einseitig offenen Rahmen 14, 15, 16 relativ zur Schlittenführung 11 verfahren zu können, sind symmetrisch zur Mittellinie 29 zwei Pneumatikzylinder 25 und 26 angeordnet, die sich am einen Ende an dem Endstück 12 abstützen und mit der Kolbenstange an den Längsträgern 15 und 16 angreifen. Durch eine entsprechende Ventilsteuerung kann so der Rahmen 14, 15, 16 fernbedient aus der in Fig. 1 gezeigten Ausgangsposition in die in Fig. 2 gestrichelt eingezeichnete Endposition verfahren werden. Durch den Rahmen 14, 15, 16 bleibt dabei die relative Position der Umlenkrollen 20, 21 zueinander und damit die Orientierung des Sägeseils 27 zwischen den beiden Rollen stets erhalten.

Zum Durchtrennen eines Betonpfeilers 28, wie er beispielhaft im Querschnitt in Fig. 1 gezeigt ist, wird zunächst die Seilsägeeinheit 10 mit dem Rahmen 14, 15, 16 in der zurückgezogenen Position seitlich am Betonpfeiler 28 befestigt. Dazu sind an der Befestigungseinheit 17 beispielsweise vertikal orientierte Stäbe oder Platten vorgesehen, mittels derer die Schlittenführung 11 am Betonpfeiler 28 festgeschraubt oder mit um den Betonpfeiler 28 herum geführten Spanngurten 30 fixiert werden kann. Ist die Einheit am Betonpfeiler 28 fixiert kann das Sägeseil 27 über die Antriebsräder 18, 22 in Gang gesetzt werden. Die Pneumatikzylinder 25, 26 drücken dann den Schlitten 13 mit dem Rahmen 14, 15, 16 nach rechts, bis der zwischen den Unlenkrollen 20, 21 gespannte Teil des Sägeseiles 27 am Betonpfeiler anliegt und der Sägevorgang beginnt. Beim weiteren Verfahren des Rahmens 14, 15, 16 frisst sich das Sägeseil 27 durch den Betonpfeiler 28, bis dieser in der Verfahrebene vollständig durchtrennt ist (Fig. 2).

Als Sägeseil wird bevorzugt ein mit Diamanten besetztes Seil eingesetzt, wie es beispielsweise aus der DE-A1-195 16 999 bekannt ist. Das Sägeseil 27 wird anschliessend aufgetrennt. Dies kann entweder an einem dafür vorgesehenen Verschluss passieren, oder durch einen Schnitt an einer dafür geeigneten Stelle. Wenn das Sägeseil aufgetrennt ist, kann der Rahmen 14, 15, 16 wieder in die Ausgangsposition der Fig. 1 zurückgefahren werden, um die Seilsägeeinheit 10 abzumontieren.

Es versteht sich von selbst, dass die breite des Rahmens 14, 15, 16 sich nach der maximalen Breite der zu durchschneidenden Strukturen richtet. Dasselbe gilt auch für die Länge der Längsträger 15, 16. Es ist denkbar, den Querträger 14 und/oder die Längsträger 15, 16 teleskopartig verstellbar auszubilden, um den Rahmen an unterschiedliche Querschnitte von zu durchtrennenden Strukturen anzupassen. In diesem Falle muss dafür Sorge getragen werden, dass ausreichend Seillänge vorhanden ist und das Sägeseil 27 immer straff gehalten werden kann.

Wenn vorgängig bei den zu durchtrennenden Materialien nur von Beton und Metall die Rede war, so versteht sich dies nur als beispielhafte nicht einschränkende Auswahl. Gemäss der vorliegenden Erfindung lassen sich nicht nur Beton und Metall, sondern sämtliche beim Bau von Infrastruktureinrichtungen gebräuchlichen Materialien und Materialkombinationen, wie zum Beispiel Gestein, Holz und mit Metall, insbesondere mit Baustahl armierter und bewehrter Beton und dergleichen, durchtrennen.

Weiterhin ist es für die gleichmässige und allseitige Abnutzung des Sägeseils 27 von Vorteil, wenn es gemäss Fig. 1 durch eine (gestrichelt angedeutete) Verdrilleinheit 30 geführt wird, welche das Sägeseil 27, beispielsweise mittels einer oder mehrerer schräg gestellter Seilrollen, während des Durchlaufs um seine Längsachse dreht.

### Bezugszeichenliste

- 10: Seilsägeneinheit
- 11: Schlittenführung
- 11a, 11b: Führungsstange
- 12: Endstück
- 13: Schlitten
- 14: Querträger (Rahmen)
- 15,16: Längsträger (Rahmen)
- 17: Befestigungseinheit
- 18,22: Antriebsrad
- 19: Seilspannrolle
- 20,21: Umlenkrolle
- 23,24: Antriebsmotor
- 25,26: Pneumatikzylinder
- 27: Sägeseil
- 28: Betonpfeiler
- 29: Mittellinie
- 30: Verdrilleinheit

## Patentansprüche

1. Seilsägeeinheit (10) zum Durchschneiden einer über oder unter Wasser befindlichen Struktur (28) aus Beton, Metall oder dgl., umfassend ein in Form einer Endlosschleife um zwei voneinander beabstandete Umlenkrollen (20, 21) geführtes, antreibbares Sägeseil (27), welches zusammen mit den Umlenkrollen (20, 21) quer zur Verbindungslinie der beiden Umlenkrollen (20, 21) verfahrbar auf an der Struktur (28) fixierbaren Führungsmitteln (11, 12, 13, 17) angeordnet ist, wobei das umlaufende Sägeseil (27) zusammen mit den Umlenkrollen (20, 21) derart ortsfest auf einem einseitig offenen Rahmen (14, 15, 16) angebracht sind, dass der zwischen den Umlenkrollen (20, 21) verlaufende Teil des Sägeseiles (27) die offene Seite des Rahmens (14, 15, 16) schliesst, und dass der einseitig offene Rahmen (14, 15, 16) zwischen einer zurückgezogenen ersten Position und einer ausgefahrenen zweiten Position verfahrbar auf den Führungsmitteln (11, 12, 13, 17) gelagert ist, **dadurch gekennzeichnet, dass** zum Verfahren des einseitig offenen Rahmens (14, 15, 16) auf den Führungsmitteln (11, 12, 13, 17) Druckzylinder vorgesehen sind und dass die Druckzylinder symmetrisch zu einer Mittellinie (29) der Seilsägeeinheit (10) angeordnet sind.

2. Seilsägeeinheit nach Anspruch 1, **dadurch gekennzeichnet, dass** das Sägeseil (27) um wenigstens ein motorisch antreibbares Antriebsrad (18, 22) geführt ist, welches ortsfest an dem Rahmen (14, 15, 16) angebracht ist.

3. Seilsägeeinheit nach Anspruch 1, **dadurch gekennzeichnet, dass** das Sägeseil (27) um zwei motorisch antreibbare Antriebsräder (18, 22) geführt ist, welche ortsfest auf gegenüberliegenden Seiten an dem Rahmen (14, 15, 16) angebracht sind.

4. Seilsägeeinheit nach einem der Ansprüche 1 bis 3, **dadurch gekennzeichnet, dass** das Sägeseil (27) um eine separate Seilspannrolle (19) geführt ist, welche zum Spannen des Sägeseiles (27) an dem Rahmen (14, 15, 16) verstellbar angeordnet ist.

5. Seilsägeeinheit nach einem der Ansprüche 1 bis 4, **dadurch gekennzeichnet, dass** der Rahmen (14, 15, 16) rechteckig ausgebildet ist und zwei Längsträgern (15, 16) und einen Querträger (14) umfasst, und dass alle für das Sägeseil (27) vorgesehenen Rollen und Räder (18,..,22) an den Längsträgern (15, 16) angebracht sind.

6. Seilsägeeinheit nach einem der Ansprüche 1 bis 5, **dadurch gekennzeichnet, dass** die Führungsmittel eine Schlittenführung (11, 12, 17) und einen auf der Schlittenführung (11, 12, 17) verfahrbar angeordneten Schlitten (13) umfassen, und dass der Rahmen (14, 15, 16) auf dem Schlitten (13) befestigt ist, wobei der Rahmen (14, 15, 16) vorzugsweise modular aufgebaut ist.

7. Seilsägeeinheit nach Anspruch 6, **dadurch gekennzeichnet, dass** die Schlittenführung (11) zwei parallele, voneinander beabstandete Führungsstangen (11a, 11b) umfasst, welche am einen Ende in einem Endstück (12) und am anderen Ende in einer Befestigungseinheit (17) gelagert sind, mit welcher die Schlittenführung (11) an der zu durchsägenden Struktur (28) befestigbar ist.

8. Seilsägeeinheit nach einem der Ansprüche 1 bis 7, **dadurch gekennzeichnet, dass** zum Verfahren des einseitig offenen Rahmens (14, 15, 16) auf den Führungsmitteln (11, 12, 13, 17) Pneumatikzylinder (25, 26) vorgesehen sind.

9. Seilsägeeinheit nach Anspruch 2 oder 3, **dadurch gekennzeichnet, dass** das motorisch antreibbare Antriebsrad bzw. die motorisch antreibbaren Antriebsräder (18, 22) von einem hydraulischen oder pneumatischen Antriebsmotor (23, 24) angetrieben werden.

10. Seilsägeeinheit nach einem der Ansprüche 1 bis 9, **dadurch gekennzeichnet, dass** das Sägeseil (27) durch eine Verdrilleinheit (30) geführt ist, welche das Sägeseil (27) während des Durchlaufs um seine Längsachse dreht.

11. Verfahren zum Betrieb einer Seilsägeeinheit nach einem der Ansprüche 1 bis 10, umfassend die Schritte:
a. Bereitstellen der Seilsägeeinheit (10) mit dem einseitig offenen Rahmen (14, 15, 16) in der zurückgezogenen ersten Position;
b. Befestigen der Führungsmittel (11, 12, 13, 17) an der zu durchschneidenden Struktur (28);
c. Antreiben des Sägeseiles (27); und
d. Verfahren des einseitig offenen Rahmens (14, 15, 16) mit dem angetriebenen Sägeseil (27) von der zurückgezogenen ersten Position in die ausgefahrene zweite Position, **dadurch gekennzeichnet, dass** das Verfahren des einseitig offnen Rahmens (14, 15, 16) durch Druckbeaufschlagung hydraulisch oder pneumatisch erfolgt.

12. Verfahren nach Anspruch 11, **dadurch gekennzeichnet, dass** nach der Beendigung des Schneidvorgangs das Sägeseil (27) aufgetrennt und abgenommen wird.

13. Verfahren nach Anspruch 11 oder 12, **dadurch gekennzeichnet, dass** der Antrieb des Sägeseils (27) hydraulisch oder pneumatisch erfolgt.

14. Verfahren nach einem der Ansprüche 11 bis 13, **dadurch gekennzeichnet, dass** ein mit Diamanten besetztes Sägeseil verwendet wird.

## Claims

1. Wire saw unit (10) for cutting through a structure (28) made of concrete, metal or the like which is situated above or below water, comprising a drivable saw wire (27) which is guided in an endless loop about two spaced-apart deflection rollers (20, 21) and which is arranged on guide means (11, 12, 13, 17) which can be fixed to the structure (28) so as to be movable together with the deflection rollers (20, 21) transversely to the line connecting the two deflection rollers (20, 21), wherein the revolving saw wire (27) together with the deflection rollers (20, 21) are mounted in a positionally fixed manner on a one-sidedly open frame (14, 15, 16) in such a way that the part of the saw wire (27) extending between the deflection rollers (20, 21) closes the open side of the frame (14, 15, 16), and wherein the one-sidely open frame (14, 15, 16) is mounted on the guide means (11, 12, 13, 17) so as to be movable between a retracted first position and an extended second position, **characterized in that** pressure cylinders are provided to move the one-sidely open frame (14, 15, 16) on the guide means (11, 12, 13, 17), and **in that** the pressure cylinders are arranged symmetrically to a centre line (29) of the wire saw unit (10).

2. Wire saw unit according to Claim 1, **characterized in that** the saw wire (27) is guided about at least one motor-drivable drive wheel (18, 22) which is mounted in a positionally fixed manner on the frame (14, 15, 16).

3. Wire saw unit according to Claim 1, **characterized in that** the saw wire (27) is guided about two motor-drivable drive wheels (18, 22) which are mounted in a positionally fixed manner on the frame (14, 15, 16) on opposite sides.

4. Wire saw unit according to one of Claims 1 to 3, **characterized in that** the saw wire (27) is guided about a separate wire-tensioning roller (19) which is arranged adjustably on the frame (14, 15, 16) in order to tension the saw wire (27).

5. Wire saw unit according to one of Claims 1 to 4, **characterized in that** the frame (14, 15, 16) is rectangular and comprises two longitudinal members (15, 16) and a crossmember (14), and **in that** all the rollers and wheels (18, ..., 22) provided for the saw wire (27) are mounted on the longitudinal members (15, 16).

6. Wire saw unit according to one of Claims 1 to 5, **characterized in that** the guide means comprise a carriage guide (11, 12, 17) and a carriage (13) arranged so as to be movable on the carriage guide (11, 12, 17), and **in that** the frame (14, 15, 16) is fastened to the carriage (13), wherein the frame (14, 15, 16) is preferably of modular design.

7. Wire saw unit according to Claim 6, **characterized in that** the carriage guide (11) comprises two parallel, spaced-apart guide rods (11a, 11b) which are mounted at one end in an end piece (12) and at the other end in a fastening unit (17) by means of which the carriage guide (11) can be fastened to the structure (28) to be sawn through.

8. Wire saw unit according to one of Claims 1 to 7, **characterized in that** pneumatic cylinders (25, 26) are provided to move the one-sidedly open frame (14, 15, 16) on the guide means (11, 12, 13, 17).

9. Wire saw unit according to Claim 2 or 3, **characterized in that** the motor-drivable drive wheel or the motor-drivable drive wheels (18, 22) are driven by a hydraulic or pneumatic drive motor (23, 24).

10. Wire saw unit according to one of Claims 1 to 9, **characterized in that** the saw wire (27) is guided through a twisting unit (30) which turns the saw wire (27) about its longitudinal axis as it passes through.

11. Method for operating a wire saw unit according to one of Claims 1 to 10, comprising the following steps:
a. supplying the wire saw unit (10) with the one-sidedly open frame (14, 15, 16) in the retracted first position;
b. fastening the guide means (11, 12, 13, 17) to the structure (28) to be cut through;
c. driving the saw wire (27); and
d. moving the one-sidely open frame (14, 15, 16) with the driven saw wire (27) from the retracted first position into the extended second position, **characterized in that** the one-sidely open frame (14, 15, 16) is moved hydraulically or pneumatically by pressure charging.

12. Method according to Claim 11, **characterized in that** the saw wire (27) is separated and removed after completion of the cutting operation.

13. Method according to Claim 11 or 12, **characterized in that** the saw wire (27) is driven hydraulically or pneumatically.

14. Method according to one of Claims 11 to 13, **characterized in that** a diamonded saw wire is used.

## Revendications

1. Unité de scie à câble (10) destinée à découper une structure (28) en béton, en métal ou similaire se trouvant au-dessus ou au-dessous de l'eau, comprenant un câble de scie (27) sous la forme d'une boucle continue pouvant être entraîné et guidé autour de deux galets de renvoi (20, 21) espacés l'un de l'autre, lequel est disposé sur des moyens de guidage (11, 12, 13, 17) pouvant être bloqués sur la structure (28) de manière à pouvoir se déplacer, conjointement avec les galets de renvoi (20, 21), transversalement par rapport à la ligne de liaison des deux galets de renvoi (20, 21), le câble de scie (27) circulaire conjointement avec les galets de renvoi (20, 21) étant monté en position fixe sur un cadre (14, 15, 16) ouvert d'un côté de telle sorte que la partie du câble de scie (27) qui défile entre les galets de renvoi (20, 21) ferme le côté ouvert du cadre (14, 15, 16) et que le cadre (14, 15, 16) ouvert d'un côté est supporté sur les moyens de guidage (11, 12, 13, 17) de manière à pouvoir se déplacer entre une première position en retrait et une deuxième position sortie, **caractérisée en ce que** des vérins pousseurs sont prévus pour le déplacement du cadre (14, 15, 16) ouvert d'un côté sur les moyens de guidage (11, 12, 13, 17) et **en ce que** les vérins pousseurs sont disposés de manière symétrique par rapport à une ligne centrale (29) de l'unité de scie à câble (10).

2. Unité de scie à câble selon la revendication 1, **caractérisée en ce que** le câble de scie (27) est guidé autour d'au moins une roue d'entraînement (18, 22) pouvant être entraînée par un moteur, laquelle roue est montée en position fixe sur le cadre (14, 15, 16).

3. Unité de scie à câble selon la revendication 1, **caractérisée en ce que** le câble de scie (27) est guidé autour de deux roues d'entraînement (18, 22) pouvant être entraînées par un moteur, lesquelles sont montées en position fixe sur des cotés opposés du cadre (14, 15, 16).

4. Unité de scie à câble selon l'une des revendications 1 à 3, **caractérisée en ce que** le câble de scie (27) est guidé autour d'un galet tendeur de câble (19) séparé qui est monté de manière positionnable sur le cadre (14, 15, 16) pour tendre le câble de scie (27).

5. Unité de scie à câble selon l'une des revendications 1 à 4, **caractérisée en ce que** le cadre (14, 15, 16) est de configuration rectangulaire et comprend deux longerons (15, 16) et une traverse (14), et **en ce que** tous les galets et toutes les roues (18, ..., 22) prévus pour le câble de scie (27) sont montés sur les longerons (15, 16).

6. Unité de scie à câble selon l'une des revendications 1 à 5, **caractérisée en ce que** les moyens de guidage comprennent un guidage de chariot (11, 12, 17) et un chariot (13) monté positionnable sur le guidage de chariot (11, 12, 17), et **en ce que** le cadre (14, 15, 16) est fixé sur le chariot (13), le cadre (14, 15, 16) étant de préférence de construction modulaire.

7. Unité de scie à câble selon la revendication 6, **caractérisée en ce que** le guidage de chariot (11) comprend deux tiges de guidage (11a, 11b) parallèles espacées l'une de l'autre, lesquelles sont supportées à une extrémité dans une pièce d'extrémité (12) et à l'autre extrémité dans une unité de fixation (17), avec laquelle le guidage de chariot (11) peut être fixé à la structure (28) à tronçonner.

8. Unité de scie à câble selon l'une des revendications 1 à 7, **caractérisée en ce que** des vérins pneumatiques (25, 26) sont prévus sur les moyens de guidage (11, 12, 13, 17) pour le déplacement du cadre (14, 15, 16) ouvert d'un côté.

9. Unité de scie à câble selon la revendication 2 ou 3, **caractérisée en ce que** la roue d'entraînement pouvant être entraînée par un moteur ou les roues d'entraînement (18, 22) pouvant être entraînées par un moteur sont entraînées par un moteur d'entraînement (23, 24) hydraulique ou pneumatique.

10. Unité de scie à câble selon l'une des revendications 1 à 9, **caractérisée en ce que** le câble de scie (27) est guidé par une unité à torsader (30) qui fait tourner le câble de scie (27) autour de son axe longitudinal pendant le défilement.

11. Procédé pour faire fonctionner une unité de scie à câble selon l'une des revendications 1 à 10, comprenant les étapes suivantes :
a. mise à disposition de l'unité de scie à câble (10) dotée du cadre (14, 15, 16) ouvert d'un côté dans la première position en retrait ;
b. fixation des moyens de guidage (11, 12, 13, 17) sur la structure (28) à découper ;
c. entraînement du câble de scie (27) ; et
d. déplacement du cadre (14, 15, 16) ouvert d'un côté avec le câble de scie (27) entraîné de la première position en retrait dans la deuxième position sortie, **caractérisé en ce que** le déplacement du cadre (14, 15, 16) ouvert d'un côté est effectué de manière hydraulique ou pneumatique par mise en pression.

12. Procédé selon la revendication 11, **caractérisé en ce qu'**après la fin de l'opération de coupe, le câble de scie (27) est séparé et retiré.

13. Procédé selon la revendication 11 ou 12, **caractérisé en ce que** l'entraînement du câble de scie (27) est effectué de façon hydraulique ou pneumatique.

14. Procédé selon l'une des revendications 11 à 13, **caractérisé en ce qu'**un câble de scie renforcé de diamants est utilisé.
